# EUROPÄISCHE PATENTSCHRIFT

(11) **EP 0 829 939 B1**
(45) Veröffentlichungstag und Bekanntmachung des Hinweises auf die Patenterteilung: **28.07.2004**
(21) Anmeldenummer: 97114875.4
(22) Anmeldetag: 27.08.1997
(51) Int. Cl.: H02H 3/08, H02H 5/04

(54) **Schaltungsanordnung mit Überlastschutz für ein Relais**
Circuit with overload protection for a relay
Circuit avec protection contre une surintensité d'un relais

(30) Priorität: 11.09.1996 DE 19636931
(43) Veröffentlichungstag der Anmeldung: 18.03.1998
(73) Patentinhaber: TYCO Electronics Logistics AG, 9323 Steinach (CH); Bayerische Motoren Werke Aktiengesellschaft, 80788 München (DE)
(72) Erfinder: Siepmann, Richard, 81369 München (DE); Spierer, Helmut, 86415 Mering (DE)
(74) Vertreter: Klunker . Schmitt-Nilson . Hirsch

(56) Entgegenhaltungen:
- DE-A- 2 822 010

## Beschreibung

Die Erfindung betrifft eine Schaltungsanordnung für ein Relais mit
- einem Erregerkreis und einem Laststromkreis, wobei mit dem Laststromkreis ein Stromsensor gekoppelt ist, der bei Überschreitung einer vorgegebenen Laststromschwelle den Erregerkreis abschaltet, und
- einem im Erregerkreis in Serie zur Erregerwicklung des Relais angeordneten Kaltleiter, der thermisch mit einer vom Laststrom durchflossenen Heizeinrichtung gekoppelt ist.
Vorzugweise geht es dabei um den Schutz der Relaiskontakte bzw. des Relais, der Leitungen und Stecksysteme des Lastkreises gegen Überlast und Kurzschluß ohne Einfügen einer zusätzlichen Sicherung.

Da Relais selbst keine Überlast erkennen und entsprechend abschalten können, ist es üblich, den Laststrom über einen Meßwiderstand zu messen und das Relais bei Überlast über einen elektronischen Verstärker abzuschalten. Daneben sind auch Schaltungen mit magnetfeldempfindlichen Fühlern bekannt. Alle diese Schaltungen benötigen eine Versorgungsspannung für die Auswerteelektronik; teilweise sind sie galvanisch mit dem Lastkreis verbunden, was die Einsatzmöglichkeiten einschränkt. An einem Meßwiderstand beispielsweise treten bei höheren Strömen erhebliche Verlustleistungen auf, was wiederum eine unerwünschte Erwärmung zur Folge hat.

Durch die DE 40 14 629 A1 ist eine Schaltungsanordnung der eingangs genannten Art bekannt, bei der sich allerdings der temperaturabhängige Widerstand und das Heizelement nach einer Schutzauslösung abkühlen. Dies kann zur Folge haben, daß der temperaturabhängige Widerstand von seinem hochohmigen Zustand in einen niederohmigen Zustand zurückkippt, wodurch der Erregerstromkreis des Relais wieder geschlossen wird.

Eine weitere Schaltungsanordnung mit den Merkmalen des Oberbegriftes des Anspruchs 1 ist aus DE 28 22 010 bekannt.

Ziel der Erfindung ist es, für ein Relais einen Überlastschutz bzw. einen Kurzschlußschutz, welcher ein selbsttätiges Wiederanziehen des Relais nach einer Schutzauslösung verhindert, mit möglichst wenig Aufwand zu erreichen, ohne daß eine Steuerelektronik eine eigene Versorgungsspannung oder eine galvanische Verbindung zum Laststromkreis erfordert.

Erfindungsgemäß wird dieses Ziel dadurch erreicht, daß parallel zur Erregerwicklung des Relais ein Nebenschluß angeordnet ist, der beim Abschalten des Relais in Serie zum Kaltleiter geschaltet wird.

Im Spulenstromkreis des Relais ist also ein Kaltleiter angeordnet, der bei Überlast den Spulenstrom abschaltet bzw. soweit reduziert, daß das Relais abfällt. Da der Kaltleiter jedoch nicht durch den Spulenstrom allein in seinen hochohmigen Zustand kippt, wird er durch eine Heizeinrichtung bzw. einen geeigneten Heizabschnitt des Laststromkreises aufgeheizt. Diese Heizeinrichtung besitzt nur eine thermische Verbindung zu dem Kaltleiter als Sensor, so daß keine galvanische Verbindung zwischen dem Laststromkreis und dem Kaltleiter als Sensor besteht. Gegenüber einer Lösung mit einem Kaltleiter, der direkt in den Lastkreis eingeschaltet wäre und somit diesen Lastkreis unmittelbar unterbrechen würde, hat die Anordnung eines Kaltleiters im Erregerkreis den Vorteil, daß ein wesentlich kleineres Element mit weniger Verlustleistung eingesetzt werden kann. Der Vorteil des niederohmigen Lastkreises des Relais bleibt damit weitestgehend erhalten.

Sobald der Kaltleiter in den hochohmigen Zustand gekippt ist, nimmt er nur noch soviel Leistung auf, wie er zur Erhaltung der Kipptemperatur bei seiner Versorgungsspannung benötigt. Falls aufgrund der großen Toleranzen von Kaltleitern ein ausreichender Strom für das Erhalten des gekippten Zustandes nicht erreicht wird, wird durch die erfindungsgemäße Zusatzbeschaltung beim Ansprechen des Überlastschutzes ein Parallelwiderstand zur Erregerwicklung geschaltet, wodurch der Kaltleiter im hochohmigen Zustand gehalten wird. Eine solche Schaltung wird beispielsweise durch den Spannungsabfall am Kaltleiter gesteuert. Sie wird so ausgelegt, daß die Gesamtschaltung erst nach Abschalten der Erregung über einen Steuerkontakt wieder in den Ausgangszustand übergeht.

Allgemein kann die erfindungsgemäße Schaltungsanordnung auch mit einem kristallinen Kaltleiter betrieben werden. Um jedoch ein schnelles Ansprechen des Überlastschutzes zu erreichen, wird vorzugsweise ein polymerer Kaltleiter verwendet, wie er beispielsweise in der US 4 237 441 oder in der EP 0 487 920-A1 beschrieben wird. Ein derartiger polymerer Kaltleiter ist bis zu seiner Sprungtemperatur sehr niederohmig, wobei Widerstandswerte von weniger als 10 mΩ möglich sind. Mit steigender Temperatur ändert sich der Widerstand zunächst bis zur Sprungtemperatur nur wenig, bei dieser Sprungtemperatur kann er sich aber innerhalb von wenigen Grad um mehrere Zehnerpotenzen erhöhen. Damit ist es möglich, das Relais beim Auftreten einer Überlast schlagartig abzuschalten.

Die Erfindung wird nachfolgend an Ausführungsbeispielen anhand der Zeichnungen näher erläutert. Es zeigt
Figur 1 eine erfindungsgemäße Schaltungsanordnung mit einem laststrombeheizten Kaltleiter,
Figur 2 eine Schaltungsanordnung gemäß Figur 1 mit einer Zusatz-Halteschaltung,
Figur 3 eine etwas abgewandelte Schaltungsanordnung mit einer Heizelektrode als Bestandteil des Kaltleiters.

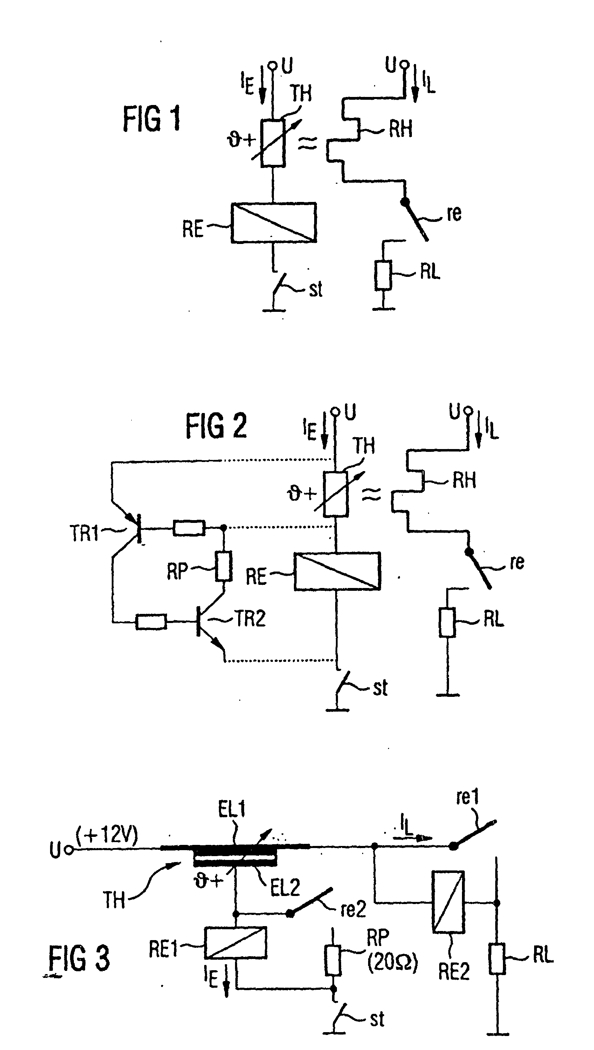

In Figur 1 ist eine Schaltungsanordnung gezeigt, bei welcher der Erregerkreis eines Relais mit der Wicklung RE an eine Spannung U geschaltet ist, so daß der Erregerstrom I_{E} fließt. In Serie zu der Relaiswicklung RE liegt ein Kaltleiter TH, der ebenfalls von dem Spulenstrom I_{E} durchflossen wird. Der Lastkreis des Relais mit dem Lastwiderstand RL wird über den Relaiskontakt re an die Spannung U angeschaltet. Außerdem liegt in Serie in dem Lastkreis ein Heizwiderstand RH bzw. ein Heizabschnitt, der ebenso wie der Lastwiderstand RL von dem Laststrom I_{L} durchflossen wird.

Im Normalbetrieb des Lastkreises erzeugt der Heizwiderstand RH so wenig Wärme, daß der Kaltleiter niederohmig bleibt. Erst beim Auftreten einer Überlast bzw. eines Kurzschlusses heizt der Heizwiderstand RH den räumlich mit ihm eng verbundenen Kaltleiter soweit auf, daß dieser seine Sprungtemperatur erreicht und sprunghaft hochohmig wird. Der Erregerstrom I_{E} wird damit so gering, daß das Relais abfällt und der Lastkreis unterbrochen wird. Aufgrund der großen Toleranzen der Widerstände und Halte- bzw. Kippströme muß eine sorgfältige Auswahl des Kaltleiters und eine Abstimmung bezüglich der thermischen Kopplung zum Heizwiderstand RH erfolgen. Bei entsprechender Auswahl des Kaltleiters ist es möglich, daß der verbleibende Reststrom ausreicht, um ihn soweit zu erwärmen, daß er in dem gekippten hochohmigen Zustand bleibt.

Da allerdings der verbleibende Reststrom in der Reihenschaltung von Kaltleiter TH und Relaiswicklung RE vielfach nicht ausreicht, um den Kaltleiter im gekippten Zustand zu halten, ist eine zusätzliche Beschaltung erforderlich, damit das Relais auch bei ungünstiger Justierung nicht wieder anzieht.

Figur 2 zeigt eine erfindungsgemäße Zusatzschaltung, durch die ein Parallelwiderstand RP zur Relaiswicklung geschaltet wird, um den Strom durch den Kaltleiter TH zu erhöhen und diesen dadurch zur Erhaltung des hochohmigen Zustandes zu heizen. Diese Zusatzbeschaltung enthält zwei Transistoren TR1 und TR2 mit entsprechenden Basiswiderständen, welche komplementär geschaltet sind. Sobald der Kaltleiter TH hochohmig wird, wird durch die an ihm abfallende Spannung der Transistor TR1 durchgeschaltet, wobei sein Kollektorstrom auch den Transistor TR2 durchsteuert. Über die Schaltstrecke des Transistors TR2 wird der Parallelwiderstand RP parallel zur Relaiswicklung RE an den Kaltleiter TH angeschaltet, wodurch sich dessen Strom erhöht. Der Kaltleiter TH kehrt also in seinen niederohmigen Zustand erst wieder zurück, wenn der Erregerkreis über einen Steuerkontakt st vollständig von der Spannung U abgetrennt wird.

In Figur 3 ist eine Abwandlung der erfindungsgemäßen Schaltungsanordnung gezeigt, wobei der Kaltleiter TH mit dem Heizwiderstand zu einem Teil vereinigt ist. Generell sind auch in diesem Fall ein Erregerkreis eines Lastrelais RE1 und ein Lastkreis mit dem Lastwiderstand RL parallel an eine Spannung U von beispielsweise +12 Volt angeschaltet. Der Lastkreis wird über einen Kontakt re1 des Lastrelais RE1 geschlossen. Der Kaltleiter TH ist in diesem Fall schematisch mit seinem Schichtaufbau dargestellt, wobei sich die Widerstandsschicht zwischen zwei Elektroden EL1 und EL2 befindet. Die Elektrode EL1 ist in Serie in den Laststromkreis geschaltet, so daß sie von dem Laststrom I_{L} durchflossen wird und als Heizwiderstand wirkt. Bei Überlast bzw. Kurzschluß im Lastststromkreis heizt diese Elektrode EL1 den zwischen der Elektrode EL1 und der Elektrode EL2 in Serie zum Erregerkreis liegenden Kaltleiter TH auf, bis er seine Sprungtemperatur erreicht und hochohmig wird, so daß das Relais abfällt.

Um nach dem Abschalten des Lastkreises den Kaltleiter TH in gekipptem Zustand zu halten, ist in diesem Fall parallel zum Lastkontakt re1 ein Hilfsrelais RE2 mit einer Wicklung geschaltet, welches beim Öffnen des Kontaktes re1 anspricht und über seinen Kontakt re2 einen Parallelwiderstand RE zur Erregerwicklung RE1 des Lastrelais schaltet. Der Kaltleiter TH wird auf diese Weise einerseits über den weiter durch die Elektrode EL1 über die Wicklung des Hilfsrelais RE2 fließenden Strom beheizt, andererseits von dem Strom des Erregerkreises über das Lastrelais RE1 und über den Parallelwiderstand RP durchflossen, so daß er in dem gekippten Zustand verbleibt, bis der Steuerkontakt st öffnet.

Auch bei der Schaltung gemäß Figur 3, bei der eine Elektrode EL1 des Kaltleiters als Heizwiderstand verwendet wird, ist der eigentliche Kaltleiter getrennt vom Laststromkreis. Im übrigen könnte natürlich auch bei einer Anordnung des Kaltleiters TH gemäß Figur 3 eine Halteschaltung gemäß Figur 2 oder eine andere Halteschaltung verwendet werden, um nach dem Ansprechen des Überlastschutzes den gekippten Zustand aufrecht zu erhalten.

## Patentansprüche

1. Schaltungsanordnung für ein Relais (RE;RE1) mit
- einem Erregerkreis und einem Laststromkreis, wobei mit dem Laststromkreis ein Stromsensor (TH) gekoppelt ist, der bei Überschreitung einer vorgegebenen Laststromschwelle den Erregerkreis abschaltet, und
- einem im Erregerkreis in Serie zur Erregerwicklung (RE;RE1) des Relais angeordneten Kaltleiter (TH), der thermisch mit einer vom Laststrom (I_{L}) durchflossenen Heizeinrichtung (RH;EL1) gekoppelt ist,
**dadurch gekennzeichnet, daß** parallel zur Erregerwicklung des Relais (RE;RE1) ein Nebenschluß (RP) angeordnet ist, der beim Abschalten des Relais in Serie zum Kaltleiter (TH) geschaltet wird.

2. Schaltungsanordnung nach Anspruch 1,
**dadurch gekennzeichnet, daß** der Nebenschluß über eine durch den Widerstandsanstieg des Kaltleiters (TH) aktivierbare Schaltungsanordnung eingeschaltet wird.

3. Schaltungsanordnung nach Anspruch 1,
**dadurch gekennzeichnet, daß** der Nebenschluß durch den Kontakt (RE2) eines Hilfsrelais (RE2) eingeschaltet wird, dessen Erregerwicklung parallel zum Lastkontakt (re1) geschaltet ist.

4. Schaltungsanordnung nach einem der Ansprüch 1 bis 3,
**dadurch gekennzeichnet, daß** der Kaltleiter (TH) ein Polymer-Kaltleiter ist.

5. Schaltungsanordnung nach einem der Ansprüch 1 bis 4,
**dadurch gekennzeichnet, daß** eine Elektrode (EL1) des Kaltleiters (TH) als Heizwiderstand ausgebildet und In Serie in den Laststromkreis geschaltet ist.

## Claims

1. A circuit arrangement for a relay (RE; RE1), having
an exciter circuit and a load current circuit, where the load current circuit has coupled to it a current sensor (TH) which switches off the exciter circuit when a predetermined load current threshold is exceeded, and
a PTC thermistor (TH) which is arranged within the exciter circuit in series with the exciter winding (RE; RE1) of the relay and is coupled thermally to a heating device (RH; EL1) through which the load current (I_{L}) flows,
**characterised in that** a shunt circuit (RP) is arranged in parallel with the exciter winding of the relay (RE; RE1) and is connected in series with the PTC thermistor (TH) when the relay is switched off.

2. A circuit arrangement according to Claim 1, **characterised in that** the shunt circuit is switched on by way of a circuit arrangement which may be activated by the increase in resistance of the PTC thermistor (TH).

3. A circuit arrangement according to Claim 1, **characterised in that** the shunt circuit is switched on by the contact (RE2) of an auxiliary relay (RE2) whereof the exciter winding is connected in parallel with the load contact (re1).

4. A circuit arrangement according to one of Claims 1 to 3, **characterised in that** the PTC thermistor (TH) is a polymer PTC thermistor.

5. A circuit arrangement according to one of Claims 1 to 4, **characterised in that** an electrode (EL1) of the PTC thermistor (TH) is in the form of a heating resistor and is connected in series with the load current circuit.

## Revendications

1. Assemblage de circuit pour un relais (RE; RE1) comprenant
un circuit d'excitation et un circuit de courant de charge, un capteur de courant (TH) étant accouplé au circuit de courant de charge, interrompant le circuit d'excitation en cas de dépassement d'un seul prédéterminé du courant de charge, et
une thermistance (TH) montée dans le circuit d'excitation en série avec l'enroulement d'excitation (RE; RE1) du relais, et accouplée thermiquement avec un dispositif de chauffage (RH; EL1) traversé par le courant de charge (I_{L}),
**caractérisé en ce qu'**un circuit dérivé (RP) est agencé parallèlement à l'enroulement d'excitation du relais (RE; RE1), et monté en série avec la thermistance (TH) lors de la déconnexion du relais.

2. Assemblage de circuit selon la revendication 1, **caractérisé en ce que** le circuit dérivé est enclenché par l'intermédiaire d'un assemblage de circuit pouvant être actionné par un accroissement de la résistance de la thermistance (TH).

3. Assemblage de circuit selon la revendication 1, **caractérisé en ce que** le circuit dérivé est enclenché par l'intermédiaire du contact (RE2) d'un relais auxiliaire (RE2), dont l'enroulement d'excitation est monté parallèlement au contact de charge (rel).

4. Assemblage de circuit selon l'une des revendications 1 à 3, **caractérisé en ce que** la thermistance (TH) est une thermistance polymère.

5. Assemblage de circuit selon l'une des revendications 1 à 4, **caractérisé en ce qu'**une électrode (EL1) de la thermistance (TH) sert de résistance de chauffage et est montée en série dans le circuit du courant de charge.
